**Europäisches Patentamt**

**European Patent Office**

**Office européen des brevets**

(19)

(11) **EP 1 318 383 A1**

(12) ## EUROPÄISCHE PATENTANMELDUNG

(43) Veröffentlichungstag:
**11.06.2003 Patentblatt 2003/24**

(51) Int Cl.⁷: **G01D 5/244**

(21) Anmeldenummer: **02024075.0**

(22) Anmeldetag: **29.10.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **06.12.2001 DE 10160835**

(71) Anmelder: **Rodi, Anton
69181 Leimen (DE)**

(72) Erfinder: **Rodi, Anton
69181 Leimen (DE)**

(74) Vertreter: **Kammer, Arno, Dipl.-Ing.
Goethestrasse 2
68766 Hockenheim (DE)**

(54) ### Anordnung zur Interpolation eines Messignals

(57) Es wird eine Anordnung zur Interpolation eines von einer Messgröße abhängigen, , analogen Messsignals beschrieben. Dieses wird einem Spannungsteiler zugeführt, dessen Abgriffssignale Komparatoren zugeführt werden, aus deren Ausgangssignalen die interpolierte Messgröße bestimmt wird.

Zur Aufwandreduzierung werden die Abgriffsignale mittels Schaltern Komparatoren zugeführt, deren Anzahl geringer als die der Abgriffssignale ist. Die Schalter müssen die Abgriffsignale hierbei folgerichtig an die Komparatoren anschalten.

Figur 2

**Beschreibung**

Die Erfindung betrifft eine Anordnung mit den Merkmalen des Oberbegriffs des Anspruchs 1 und das Verfahren mit den Merkmalen des Oberbegriffs des Anspruchs 14.

Für industrielle Belange sind inkremental- und absolutmessende Sensorsysteme im Einsatz und mit zunehmender Tendenz z.B. bei Winkel- und Wegmessungen, die Kombination von beiden Messverfahren in hochauflösenden Absolut-Messsystemen. Stets will man in Messsystemen die Absolutlage und Relativverstellung erfassen und beschränkt sich oft nur auf die Relativmessungen, da z. B. die hierzu geeigneten inkrementellen Sensorsystem kostengünstiger herzustellen sind.

Nachstehend werden anhand der Digitalisierung von Winkel- und Wegmesssystemen die grundsätzlichen Anforderungen an hochauflösende Messsignale erläutert, wobei die Betrachtungen auch auf andere physikalisch/chemisch abgeleitete Messgrößen übertragbar und anwendbar sind.

Will man mit einem Inkremental-Messsystem auch die Absolutlage erfassen, so sind weitere Hilfseinrichtungen notwendig, die einerseits die absolute Ausgangslage bestimmen und andererseits permanent die Inkrementalsignale folge- und richtungsabhängig darauf beziehend ermitteln. Abgesehen vom EIN/AUS-Vorgang bei der Versorgungsspannung, geht auch bei Netzstörungen bzw. Übertragungsfehlern der Inkrementalsignale der Absolutwert verloren und es bedarf jeweils der Neu-Referenzierung. Besonders bei fortlaufend betriebenen Maschinen in störbehafteten Umgebungsbedingungen sind diese Messsysteme unzuverlässig und problematisch für den sonst unterbrechungsfreien Produktionsprozess.

Das herkömmliche Absolut-Messsystem ist wiederum aufwendig in der Realisierung des Sensorsystems und stößt an Grenzen, besonders dort, wo hohe Auflösungen der Winkel- und Wegmessstrecken auch im hohen Geschwindigkeitsbereich gefordert sind.

Daher haben sich zunehmend die kombinierten Messsysteme durchgesetzt mit Absolut-Winkel-/Wegmesssensoren mit Auflösungen von z. B. $\geq$ 8 Bit, d. h. Winkelstrekken von kleiner 1,5°, und Längenmesssensoren von Wegstrecken $\leq$ 50 µm.

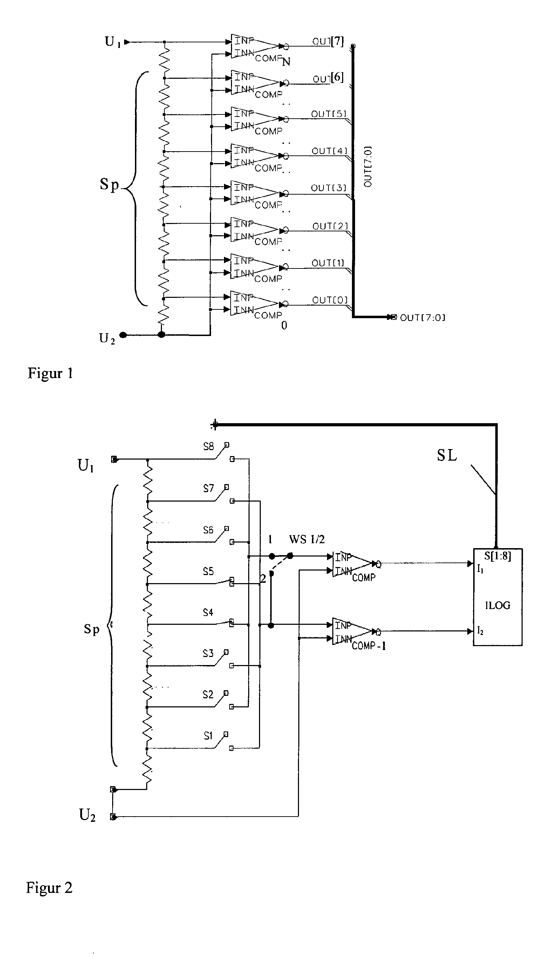

Besonders die im Winkel-/Wegmesssensor vorteilhafte und vollständig verarbeiteten Messsignale zu Absolutwerten - wie sie z. B. in der Anmeldung Schweizer Patentschrift CH210599 näher beschrieben ist - bedingen eine sorgfältige Messsignalerfassung sowie Auswertung. Dabei werden zwischen den separat ermittelten Absolutwerten die zwischen zwei Absolutwerten liegenden Inkrementalwerte zur Bildung des Gesamtabsolutwertes herangezogen. Die dort für die Interpolation der Inkrementalwerte herangezogene Analog-Digitalwandlungen mit Komparator-Technologien haben den Nachteil, dass der Aufwand für die Auflösungen bereits bei 5 bis 6 Bit zu groß wird und der Hardware-Integrationsaufwand an seine Grenzen stößt. Mit steigendem Auflösungsschritt steigt der Hardware-Integrationsaufwand um Faktor 2. Diese Technologie ist in Fig. 1 der Zeichnung dargestellt. Das Messsignal $U_1$ kann sich z. B. linear von 0 bis auf $U_{1max}$ ändern. $U_1$ wird an einem Spannungsteiler Sp gelegt, dessen Abgriffe alle jeweils mit einem Operationsverstärker COMP verbunden sind, denen auch die Vergleichsspannung $U_2$ zugeführt wird. Die Operationsverstärker COMP schalten jeweils, wenn die ihnen zugeführte Abgriffspannung die vorgegebene Schwelle erreicht hat. Aus dem Schalten der Operationsverstärker wird auf den jeweils erreichten Zwischenwert geschlossen, der dann dem benachbarten Absolutwert zugeschlagen wird.

Um diesem hohen Aufwand zu bewältigen wird als praktikable Lösung für darüber liegende Auflösungen in der obigen Patentschrift CH210599 auf die erwartet zunehmende Verarbeitungsgeschwindigkeit der Halbleitertechnologie verwiesen und vorgeschlagen, bis dahin Sinus-/Cosinus-Signale zusätzlich herauszuführen und dort die höherauflösende AD-Wandlung extern vorzunehmen.

Es ist Aufgabe der Erfindung, eine Interpolationsschaltung, sowie ein Verfahren zur Interpolation analoger Messgrößen zu schaffen, das mit hoher Geschwindigkeit und Genauigkeit arbeitet und das die oben beschriebenen Nachteile beseitigt.

Die Aufgabe wird durch die Interpolationsschaltung und das Interpolations-Messverfahren, gemäß den unabhängigen Patentansprüchen 1 und 14 gelöst.

Unter Komparator wird ganz allgemein ein geeigneter Schwellwertschalter verstanden, der ausreichend schnell und genügend hochauflösend arbeitet.

Der erfindungsgemäße Interpolator bzw. die Interpolation macht sich besonders vorteilhaft die Stetigkeit von Funktionen für Messsignalverarbeitung zu Nutze, wie sie für die Messgrößenermittlung, z. B. bei Trigonometrischen Funktionen für SIN- und COS-Signalen gegeben ist. Nachfolgend werden am Beispiel der SIN-/COS-Signalverarbeitung von wegabhängigen Größen, die vorteilhafte Ausgestaltung des Interpolators bzw. der Interpolationsmethode erläutert, wobei die Anordnung sowie Ausführung sich grundsätzlich auch für andere analogen und insbesondere stetigen analogen Messsignalverläufe entsprechend anbietet und vorteilhaft verwendet werden kann.

Ein Sensorsystem hat möglichst permanent Messwerte zu erfassen, wenn es auch in dynamischen Anwendungen eingesetzt werden soll. Der jederzeitige Zugriff auf Messwerte ist damit schnellstmöglich gegeben, da diese schon zum Abfragezeitpunkt verarbeitet vorliegen und in "Echtzeit" ausgegeben werden können. Für solche "Echtzeit"-Messsysteme, bei denen die Taktfrequenz für die logische Signalverarbeitung auch zur Interpolation analoger Messgrößen herangezogen wird, sind besondere Maßnahmen zu treffen. Unabhängig vom steigenden Aufwand z. B. an Hardware-Logik zur Interpolation bei höheren Auflösungen, sind neben zeitkritischen Schaltungsmaßnahmen auch die zunehmend kleiner werdende Signalamplituden bei jedem Auflösungsschritt kritisch für die Genauigkeit und Störungsempfindlichkeit der Wertermittlung besonders zu beachten.

Bei der erfinderischen Ausgestaltung der Interpolation wird die oben gestellte Aufgabe dadurch gelöst, dass die Anzahl der zum Vergleich heranzuziehenden Komparatoren kleiner als die Zahl der durch die Auflösung vorgegebenen Vergleichsstellen gewählt wird und dass diese mittels Schalter folgerichtig an mindestens einen Komparator zur Signalauswertung geführt werden.

Die so vorteilhafte Ausgestaltung der Interpolation hat in der Auflösung der Analogwerte Grenzen, die durch Genauigkeit der zu bildenden Widerstandsteiler und Offsetwerten der Komparatoren gegeben sind. Da die Widerstandswerte im Promillebereich der durch Halbleiter realisierbaren Genauigkeiten liegen, und die Offsetwerte der Komparatoren ebenfalls im Promillebereich des Nutzsignals sich befinden, sind in der ersten Stufe der Interpolation Auflösungen von ca. 8-Bit noch ohne große Zusatzaufwendungen erreichbar. Der Vorteil der reduzierten Komparatoren kann jedoch zusätzlich genutzt werden, in dem ein On-Chip Offset-Abgleich durchgeführt wird, der den Auflösungsbereich dann mit entsprechend aufwändigeren Widerstandteilen - z. B. durch Parallelschaltung der Widerstände kann die Genauigkeit entsprechend erhöht werden - bis zu 10-Bit gestattet auszuweiten.

In vielen Anwendungen, z. B. bei Servoantrieben zur Lageregelung sind möglichst hohe Gesamtauflösungen gefragt, die sich bis in Bereiche von 22-...24- und sogar bis 26-Bit bei Drehgeber bewegen. Entsprechendes gilt bei steifen Lageregelungen von Linearantrieben mit Wegauflösungen von einigen Nanometer. Dabei kommt es vordringlich auf die feinfühlige Erfassung der Relativbewegung der zu messenden Verstelleinrichtung an, um für die Steuerung die Geschwindigkeit bzw. Beschleunigung aus der Winkel-/Wegmessgröße abzuleiten. Damit sind für Winkel- und Wegmessgeber möglichst hohe Genauigkeiten bis zu Gesamt-Grundauflösungen z. B. 17- bis 18-Bit und darüber nur relativ auswertbare Winkel-/Wegauflösungen bis hinauf zu 22- bis 26-Bit zu erbringen.

In der Patentschrift CH210599 ist z. B. der Gesamtabsolutwert von 17- bis 18-Bit durch ein 12-Bit Grund-Absolutwert und mittels Interpolation gewonnenen 5- bis 6-Bit Inkrementalwert (auch Feinwert genannt) zusammengesetzt. Eine Interpolation von 8-Bit würde hier bereits einen Gesamtabsolutwert von 20-Bit ergeben. Und mit entsprechenden Widerstandsteiler- sowie Offset-Kompensationsmaßnahmen ist die Gesamtauflösung sogar bis 22-Bit steigerbar.

Durch die weitere Ausgestaltung der Erfindung lässt sich die Auflösung der Interpolation noch weiter steigern, bis hinauf zu 12-Bit und darüber, so dass Gesamtabsolutwerte mit 24- bis 26-Bit erzielt werden können. Dies wird erreicht, in dem auf die erste Interpolationsstufe eine zweite Interpolationsstufe aufgesetzt wird, in der die jeweiligen Differenzwerte der ermittelten ersten Stufe verstärkt und in der zweiten Stufe weiter interpoliert werden. Die gewonnenen Messwerte aus der ersten Interpolationsstufe werden Feinwerte und die aus der zweiten Interpolationsstufe als Feinstwerte bezeichnet. Der so zu bildende Gesamtabsolutwert von z. B. 24-Bit setzt sich aus dem Grundabsolutwert von z. B. 12-Bit und dem Interpolationswert von z. B. 12-Bit zusammen, der wiederum aus z. B. 8-Bit Feinwert und 4-Bit Feinstwert gebildet wird.

|   | | |
|---|---|---|
|   | Grundabsolutwert | 12-Bit |
| + | Feinwert-Interpolation | +  8-Bit |
| + | Feinstwert-Interpolation | +  4-Bit |
| = | Gesamtabsolutwert | = 24-Bit |

Die nach der Erfindung aufgebaute Interpolation erlaubt die unter Echtzeitbedingungen zu ermittelnde Gesamtabsolutwerterfassung. Der Gesamtabsolutwert kann außerhalb eines Sensors gebildet werden, in dem z. B. der Grundabsolutwert und die SIN-/COS-Signale zur Auswerteelektronik mit der erfinderischen Interpolation geführt und dort synchrongerecht zusammengesetzt werden. Besonders vorteilhaft ist die Interpolation im Sensor selbst zu bilden, da so höchste Genauigkeiten und Auflösungen in störbehafteten Umgebungsbedingungen mit maximalen Verarbeitungsgeschwindigkeiten bei der Gesamtabsolutwertbildung erzielt werden. Die sehr hohen Auflösungen erfordern zweckmäßigerweise auch die entsprechende Behandlung der ermittelten Interpolationswerte.

Gemäß einer Weiterbildung der Erfindung wird ein adaptiver Interpolationsfilter vorgeschlagen, bei dem die Differenz zwischen dem gefilterten Messwert und dem aktuellen Messwert einer zeitgetakteten Bewertungseinrichtung zugeführt wird. Durch die Summe der Differenzen wird bei Erreichung bestimmter Grenzwerte der zuletzt gefilterte Messwert um einen Auflösungsschritt folgerichtig erhöht oder erniedrigt und zur Messwertausgabe gebracht.

In der weitergestalteten Erfindung wird ein Digitalfilter derart ausgebildet, dass die zuletzt festgestellte Bewegungsrichtung der gelieferten Messwerte zur unterschiedlichen Bewertung der aktuellen Messwerte um mindestens einen Auflösungsschritt nach Richtung der Abweichung zur Messwertausgabe herangezogen wird. Die Bewertung ist weiterführend nach der Abweichung der aktuellen Messwerte im Vergleich zu den zur Messwertausgabe herangezogenen Werten sowie durch Dauer nach Abfragetaktzyklen vorteilhaft in Ansatz zu bringen. Die adaptive Digitalfilterung hat hierbei den Vorteil, dass die auszumittelnden Abweichungen nur auf Messwertabweichungen selbst bezogen sind und somit im gesamten Messbereich unbeeinflusst von Filterzeiten - vom Stillstand bis zur maximalen Geschwindigkeit der Messwertänderungen - herangezogen werden können. Die unterschiedliche Bewertung durch Filtergrößen nach Bewegungsrichtung bestimmt sich aus den vorwiegend in der Mechanik vorhandenen Lager -(Spiel), Elastizitäts- sowie Reibungsverhältnissen. In der Bewegungsrichtung sind daher die Störgrößen in der Regel insgesamt geringer, so dass die Filtermaßnahmen schwächer als in der Gegenrichtung und daher vorteilhaft asymmetrisch in vielen Fällen auszuführen sind. Aber auch andere Störgrößen, wie z. B. Reglereigenschaften der Steuerung oder asymmetrische Signalstörgrößen können durch die Filtereigenschaften nach Bewegungsrichtung entsprechend optimal angepasst und eventuell bei Bedarf und besonderen Verhältnissen auch entgegengesetzt bewertet ausgeführt werden. Die Optimierung der asymmetrischen Filterung von Messsignalen bietet den Vorteil, eine schnellstmögliche und störungsfreie Messsignalverarbeitung im Anwendungseinsatz zu erreichen.

Oft sind jedoch im Industrieeinsatz besonders bei niederen Geschwindigkeiten bzw. Stillstand besonders hohe Messsignalauflösungen gefragt, so dass die Interpolation und auch damit Filterung nach der Geschwindigkeit der zu messenden Verstelleinrichtung entsprechend gewählt bzw. automatisch umgeschaltet werden kann. Dies ermöglicht z. B. bei Stillstand die höchste Auflösung und proportional der Geschwindigkeit die jeweilige höchstmögliche Auflösung der Interpolation zu wählen, damit unter Echtzeitbedingungen - d. h. dass während einem Taktzyklus der Messwertverarbeitung - z. B. mit 30 bis 50 MHz noch sicher der Messwert im Auflösungsschritt erfasst werden kann. Mit dem Einbezug der Geschwindigkeit der Messeinrichtung ist z. B. die jeweils höchste Interpolationsstufe samt dazu optimierter Filterung bei der Messsignalverarbeitung vorteilhaft zu bewerkstelligen.

Anhand der Figurenbeschreibungen werden Ausführungsbeispiele der Erfindung und deren Ausgestaltung näher erläutert:

Fig. 1: zeigt ein Prinzip herkömmlicher Interpolation mit einer Vielzahl von Komparatoren

Fig. 2: zeigt das Prinzip der erfindungsgemäßen Interpolation mit Schalternetzwerk und einem bzw. zwei Komparatoren

Fig. 3: zeigt ein Ausführungsbeispiel der Interpolation mit Schalternetzwerk und einem bzw. zwei Komparatoren unter Verwendung von drei Sinusvektoren

Fig. 4: zeigt ein Prinzip der Zweistufen-Interpolation mit A/D-Wandlung für Feinstwerte

Figur 5: zeigt ein Prinzip der Zweistufen-Interpolation mit zwei OPAMP- und Vergleichskomparatoren für Feinstwerte

Fig. 6: zeigt ein Ausführungsbeispiel mit Schaltnetzwerk und einem bzw. zwei Komparatoren mit drei Sinus-Signalvektoren für Feinwertbildung sowie zwei OPAMP mit Vergleichskomparatoren zur Feinstwertbildung

Fig. 7: zeigt ein Prinzip der Offset-Kompensation von Komparatoren und Operationsverstärker

Fig. 8: zeigt den Signalverlauf im einstufigen Interpolator für Sinus-Signalvektoren

Fig. 9: zeigt ein Blockschaltbild eines adaptiven Digitalfilters

Fig. 10: zeigt das Ablaufdiagramm eines adaptiven Digitalfilters

In Fig. 2 wird die erfinderische Ausgestaltung der Interpolation mit einem Schaltnetzwerk und wesentlich geringerem Komparator-Aufwand aufgezeigt. Die drastische Einsparung wird offensichtlich, wenn man für einen Komparator ca. achtzig Transistoren im Gegensatz zu 1 Transistor für einen Schalter ansetzt. Die Abgriffpunkte des Spannungsteilers Sp sind hier mit Schaltern S1 bis S8 verbunden, die die einzelnen Abgriffpunkte mit den beiden Komparatoren COMP und COMP -1 verbinden können. Durchgeschaltet werden hier jeweils zwei benachbarte Schalter - in der Fig. 2 die Schalter $S_4$ und $S_5$. Die Spannung des dem Schalter $S_4$ zugeordneten Abgriffpunkts des Spannungsteilers Sp hat den Operationsverstärker COMP geschaltet. Der Operationsverstärker COMP -1 ist dann in Wartestellung, ob die Spannung an dem dem Schalter $S_5$ zugeordneten Abgriffspunkt seine Schwelle erreicht. Ist dies der Fall, so wird das Schalterpaar $S_5/S_6$ aktiv. Unterschreitet jedoch die Spannung den dem Schalter $S_4$ zugeordneten Wert und damit COMP aus, so wird das Schalterpaar $S_3/S_4$ aktiv geschaltet. Die Umschaltung der Schalter wird durch den Block ILOG bewirkt, was durch die Sammelleitung SL angedeutet ist.

Diese Logik ILOG ist eine erweiterte Dekodierlogik, die die augenblickliche Winkelstellung erfasst und ausgibt und umfasst nur weniger als 100 Gatter. Damit wird ein wesentlich geringerer Halbleiteraufwand benötigt, der die höhere Interpolation mit weniger Chipfläche erlaubt.

Gezeigt wird in der Fig. 2 auch eine Lösung mit nur einem Komparator COMP, der dann einen zusätzlichen Wechselschalter WS 1/2 benötigt, wobei dieser ebenfalls durch die ILOG vom Zustand 1 auf 2 folgerichtig zu schalten ist. Hat z. B. der Schalter S4 zum Einschalten des Komparators COMP geführt, so wird folgerichtig zu S4 der benachbarte Schalter S3 bzw. S5 abwechselnd mit der Taktfrequenz über WS 1 /2 an den Komparator COMP geschaltet. Bei zwei Komparatoren COMP und $COMP_{-1}$ wird der Wechselschalter nicht benötigt.

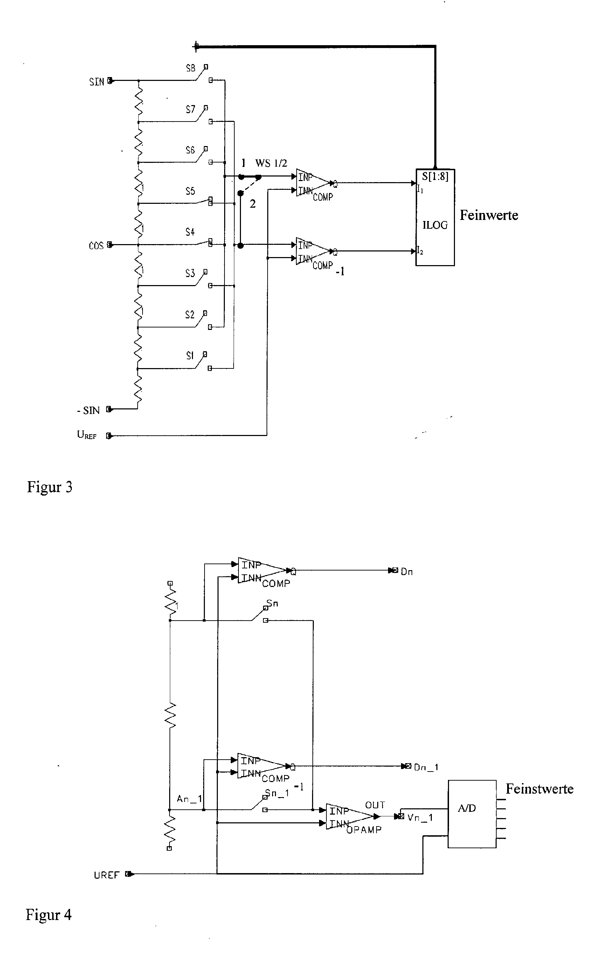

In Fig. 3 wird das Prinzip der Interpolation mit Schaltnetzwerk gemäß Fig. 2 mit SINund COS-Signalen angewandt. Dabei wird durch die Zuführung bzw. Einspeisung der 3 Vektoren aus den SIN-/COS-Signalen an das Widerstandsnetzwerk sowie mit dem $U_{Ref}$-Vergleich der Aufwand an Widerständen und damit die Anzahl von Vergleichsstellen bzw. Schalter um Faktor zwei reduziert. Aus sonst nur mit SIN-/COS-Signalen bestehende Messsignale lässt sich einfach ein dritter Vektor erzeugen, indem aus +SIN- um 180° verschobenes -SIN-Spannungssignal durch Invertierung erzeugt wird. Dies kann auch mit +COS- zu -COS-Signal ebenso geschehen. Üblicherweise haben z. B. magnetoresistive Sensoren durch ihre Brückenschaltung ± SIN- und ± COS-Signale als Messsignal herausgeführt, wobei sich hier sehr einfach die drei Vektoren bilden lassen, um zur erfinderischen Interpolation herangezogen zu werden. Die drei Vektoren können z. B. aus +SIN, -SIN, +COS, oder +COS, +SIN, -COS gebildet sein, wobei sich die Reihenfolge der Vektoren nach Phasenlage zueinander und gewünschter Nullpunktbeziehung zur binären Signalausgabe zu richten hat.

Der Interpolator hat somit in Fig. 2 die Auflösung von 3 Bit (8fach) und in Fig. 3 mit gleicher Anzahl von Vergleichsstellen (Abgriffspunkte, z. B. Widerstände/Schalter) die Auflösung von 4 Bit (16-fach). Auch hier in Fig. 3 kann die Interpolation wie in Fig. 2 mit einem oder zwei Komparatoren durchgeführt werden, wobei die Logik ILOG die Schalter $S_1$ bis $S_8$ bzw. W 1 / 2 entsprechend steuert.

Die Anzahl der Schalter S richtet sich nach der Zahl der Auflösungsstufen und ist z. B. bei einem 10-Bit Binärwandler ($2^{10}$) mit 10 Schaltern zu gewährleisten.

Die Signalfolge ist aus dem Signalverlauf der Fig. 8 für z. B. 5-Bit-Interpolation entsprechend zu entnehmen. Besonders vorteilhaft ist bei dieser vektoriellen SIN-/COS-Signalverarbeitung, dass der zur Auswertung herangezogenen Vektor im Spannungsbetrag mindestens der Amplitude und bis zum 1,4-fachen Teil der Amplitude entspricht und somit ein fast gleichbleibend hohes Spannungspotential stets zur Auswertung bietet. Zusätzlich eliminieren sich weitestgehend Signal-Rausch-Amplituden durch die den Vektor bildenden Differenzspannungen, so dass präzise Messsignale zur hochgenauen Interpolation herangezogen werden können. Ein weiterer Vorteil der vorgenannten vektoriellen Interpolation ist die direkte Signalverarbeitung zu binären Daten, die keiner zusätzlichen und aufwendigen Rechnerverarbeitung bedarf. Es sind lediglich die Abgriffstellen über Widerstandsteiler entsprechend zu dimensionieren und bedarfsgerecht über Schalter der direkten Auswertung zuzuleiten.

Wie bereits erwähnt, das Prinzip des einstufigen Interpolators für Feinwerte ist auf etwa 8-Bit Auflösung begrenzt und nur mit aufwendigen Maßnahmen zu erhöhen. Es wird daher eine Schaltungsvorrichtung bzw. Verfahren gesucht, das die vorteilhafte Interpolation mit höheren Auflösungen gestattet. Ein Ansatz diese Grenze zu überwinden ist, die erfindungsgemäße Winkelbestimmung in zwei Stufen durchzuführen.

In Fig. 4 wird das Prinzip der Zweistufen-Interpolation mit A/D-Wandlung für Feinstwerte gezeigt.

Es wird digital die Stelle des Widerstandsnetzwerkes bestimmt, an der ein Komparator zuletzt geschaltet hat. In Fig. 4 ist prinzipiell nur ein Teil des Spannungsteilers der Fig. 2 gezeigt, an den die beiden Operationsverstärker COMP und COMP -1 nacheinander angeschaltet werden. Der Komparator der zuletzt geschaltet hat, ist hier der Komparator COMP_1 mit Ausgang Dn_1. Das am Eingang dieses Komparators anliegende Signal An_1 wird nun über einen Schalter Sn_1 auf einen Operationsverstärker OPAMP geschaltet und zu dem analogen Signal Vn_1 verstärkt. Dieses Signal ist jetzt proportional zur Differenz des aktuellen Winkels zum durch das Umschalten von COMP_1 gegebenen Winkel. Dieser Differenzwinkel kann nun durch eine geeignete A/D-Wandler digitalisiert werden und als Feinstwert Korrektur zu den Feinwerten zugefügt werden.

Um eine entsprechende zeitliche Auflösung dieses Feinstwertes zu erreichen, muss entweder die A/D Wandlung in dem Block A/D sehr schnell erfolgen (1 Taktperiode ) oder sie muss durch eine Sample - and - Hold Schaltung quasi eingefroren werden.

Mit der Einführung einer A/D Wandlerschaltung an dieser Stelle ist darauf zu achten, dass zumindest eine der hervorragenden Eigenschaften der Einfachheit oder absoluten Echtzeitfähigkeit des Interpolators nicht verloren geht. Wenn ein relativ einfacher A/D Wandler - wie ein Sigma-Delta Wandler - eingesetzt wird, werden zur Ermittlung des Feinstwertes viele Taktzyklen benötigt. Bei sehr schnellen AD-Wandlern ist der Schaltungsaufwand für die Interpolation bereits bei geringen Auflösungen aufwendig.

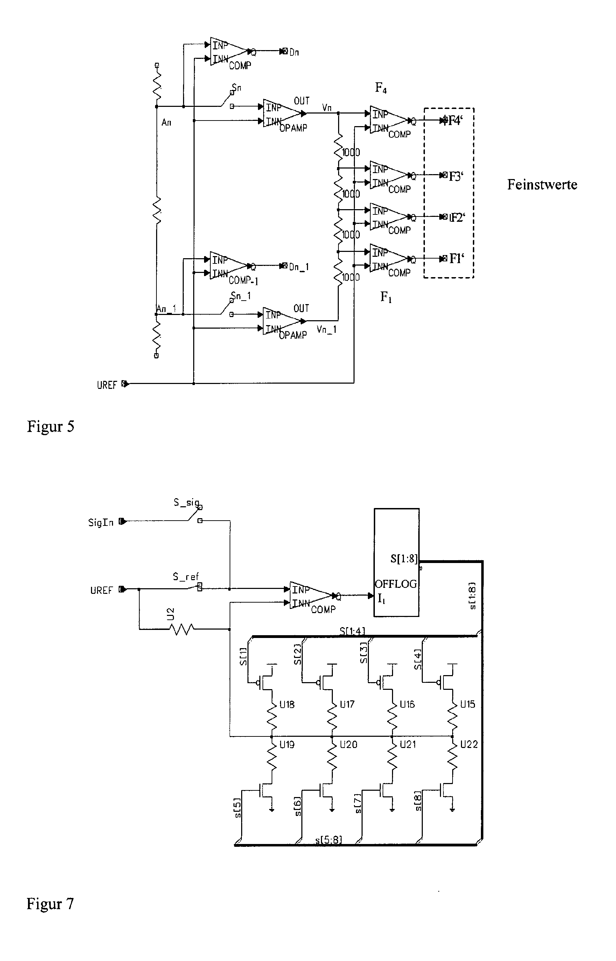

Das geeignete Prinzip einer derartigen Ausführung bzw. eines entsprechenden Verfahrens ist in Fig. 5 dargestellt. COMP_1 und COMP sind die Komparatoren, die anzeigen, dass An_1 kleiner und An größer als Uref ist, d. h. der gesuchte Winkel befindet sich zwischen den beiden durch die Komparatoren gegebenen Feinwerten. Die beiden Analogwerte An und An_1 werden über die Schalter Sn und Sn_1 auf zwei identische Verstärker OPAMP gegeben sowie zu den Signalen Vn und Vn_1 verstärkt und wiederum in eine Widerstandskette eingespeist. Dabei gilt Vn ≥ Uref > Vn_1. Mit den als Beispiel gezeigten vier Komparatoren F1 bis F4 wird die geteilte Spannung wiederum mit Uref verglichen und analog zur ersten Stufe wird aus den digitalen Ausgangswerten F1' bis F4' ein Winkelwert (im Beispiel 2 Bit ) zwischen den Feinwerten bestimmt. Diese A/D-Wandlung in einer Taktperiode (Flash AD-Wandler) ist bei geringer Auflösung mit entsprechend wenigen Komparatoren noch gut anwendbar.

Prinzipiell ist auch in der zweiten Stufe eine Schalterlösung mit einem bzw. zwei Komparatoren analog Figur 2 mit COMP bzw. COMP_1 und WS 1 / 2 ausführbar. Sie ist dann besonders vorteilhaft gegenüber Flash A/D-Wandler, wenn z. B. die Auflösung in dieser zweiten Stufe über 2 Bit hinausgeht.

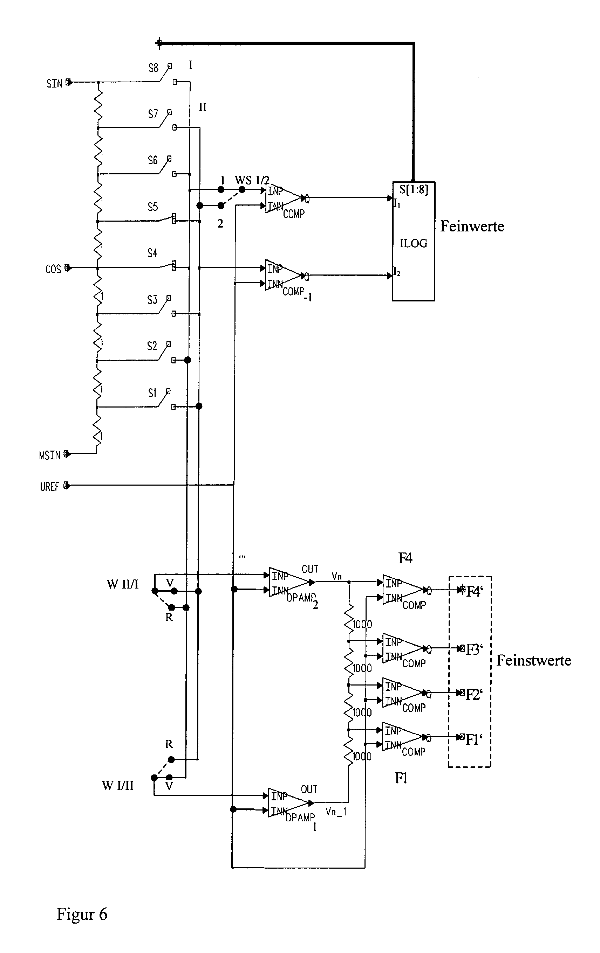

Die Schaltung der Fig. 6 zeigt das Prinzip des ein- und zweistufigen Interpolators in der erfindungsgemäßen Anordnung. Mit einfachen integrierbaren Schaltungskomponenten und damit kostengünstiger Ausführung wird zusätzlich eine volle Echtzeitfähigkeit erreicht, die im Einsatz für hochauflösende und schnelle Messsignalverarbeitung die gefragten Funktionsvoraussetzungen bieten.

Die Feinwerte werden wie in Fig. 3 beschrieben ermittelt, wobei die Logik von ILOG auch die folgerichtige Umschaltung der Wechsler W II/I und W I/II zu den Operationsverstärkern OPAMP1 und OPAMP 2 steuert. Die Spannung nach den OPAMP's wird entsprechend über Widerstandsteiler dann zu Komparatoren geführt, deren Signalfolge zur Feinstwertbildung herangezogen wird.

Nicht weiter ausgeführt ist die einfach logisch nachvollziehbare Zusammensetzung der Feinwerte mit den Feinstwerten, die mit dem Grundabsolutwert den Gesamtabsolutwert bilden. Ebenso sind über die frei wählbaren Schalter S die jeweils zweckmäßige Auflösung der Interpolation, z. B. in Abhängigkeit der Geschwindigkeit der Messeinrichtung, über einfache Logikschaltungen zu realisieren. So ist im einfachsten Fall z. B. die Auswahl der Interpolationsstufen (ein- bzw. zweistufig) nach den Geschwindigkeitsbereichen der Messeinrichtung sehr einfach bewerkstelligbar.

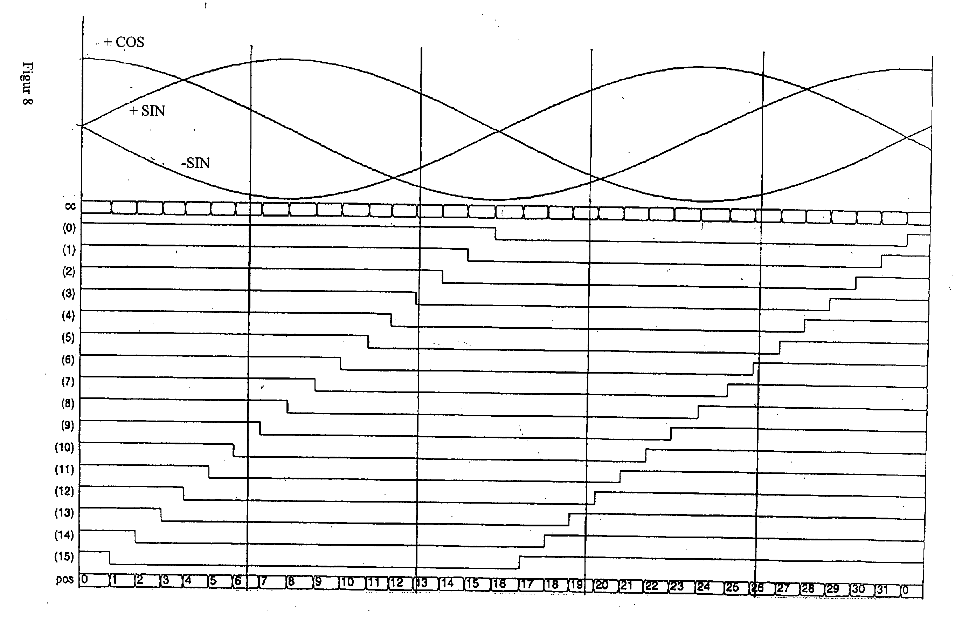

In Fig. 7 ist das Prinzip der Offset - Kompensation am Beispiel des Komparators COMP dargestellt. Zunächst wird dessen INP-Eingang durch den Schalter $S_{-sig}$ von der Signalquelle Sig $I_n$ getrennt und durch den Schalter $S_{ref}$ auf die Referenzspannung $U_{ref}$ geschaltet. Durch Schalten der durch S1 bis S8 bezeichneten Transistoren fließen über die Widerstände U15 bis U22 Ströme, die an den Widerstand U2 und damit an Eingang INN eine Korrekturspannung erzeugen. Die Widerstände U15 bis U18 (U19 bis U22) stehen dabei symbolisch für binär abgestufte Stromquellen nach VDD (VSS). Diese Stromquellen sind so abgestuft, dass unter Berücksichtigung von U2 eine Kompensationsspannung bis zur maximal zu erwartenden Offsetspannung eingestellt werden kann. Die Auswahl der geeigneten Stromquellen erfolgt durch die Logik OFF_LOG, die jeweils beim Reset des Chips bzw. periodisch aktiviert wird. Mit der gezeigten Anordnung lässt sich der Offset gut auf 1/16 reduzieren.

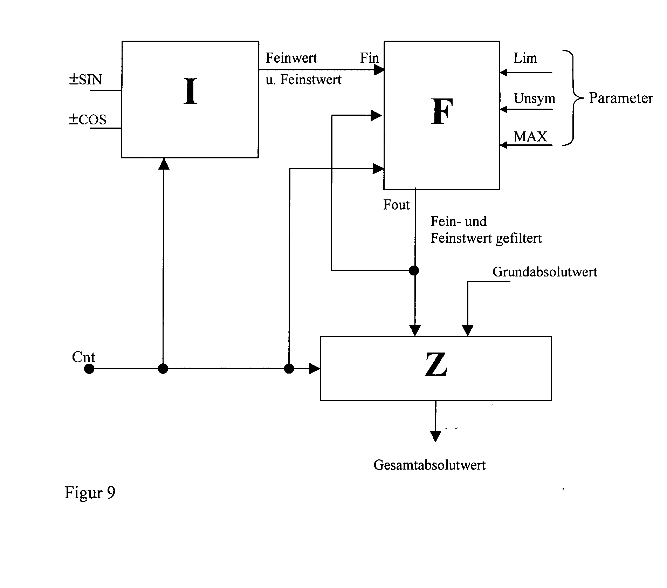

Die hochaufgelösten Messsignale für Fein- und Feinstwerte sind bei den industriellen Umgebungs- und Messbedingungen entsprechenden Störgrößen ausgesetzt. So sind die vom Sensor gelieferten Spannungen überlagert von Rausch- und Störamplituden, die im Messarbeitsbereich bis zu höchsten Verstellgeschwindigkeiten nicht genügend und nicht einfach gefiltert werden können. Zur Beschreibung und Erläuterung der grundsätzlichen Funktionsweise wird als Beispiel für die Weiterverarbeitung der Fein- und Feinstwerte eine asymmetrische adaptive Digitalfilterung herangezogen. Die Fig. 9 zeigt eine vorteilhafte Ausführung zur wirksam schnellen sowie weitestgehend störfreien Messsignalerfassung.

Das adaptive Digitalfilter F hat als Eingang die vom Interpolator I gewonnenen aktuellen Fein- und Feinstwerte Fin, die mit dem anderen gefilterten Fein- und Feinstwerten Fout in Rückführung verglichen und nach bestimmten Grundfilterparameter aufsummiert zum Vergleich mit bestimmten und parametrierbaren Grenzwerten herangezogen werden. Nach Erreichen einer der Grenzwerte wird folgerichtig die so gefilterte Messwertausgabe FOUT um einen Auflösungsschritt erhöht oder erniedrigt. Dabei sind bei der Ermittlung der nach der Bewegungsrichtung gewählten Grundfilterparameter zweckmäßigerweise die Parametergrößen Unsym und Lim entsprechend einfach zu verknüpfen. Im Block Z werden der Grundabsolutwert und der gefilterte Fein-/Feinstabsolutwert zusammengesetzt.

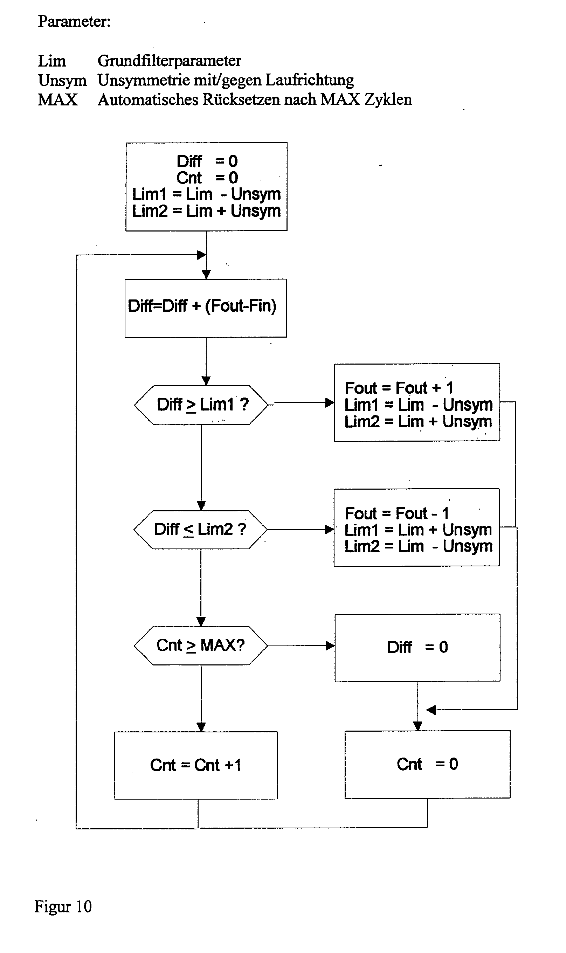

In Fig. 10 ist eine einfache asymmetrische Ausführungsform des adaptiven Filters in der Wirkungsweise anschaulich wiedergegeben. Im Ausgangszustand sind die Differenz Diff = 0 und Count Cnt = 0, d. h. der aktuelle Messwert Fin ist gleich dem Ausgabemesswert Fout. Bei der beginnenden Taktung Cnt wird nach dem Ablaufdiagramm zuerst die Diff = Diff + (Fout - Fin) für jeden Taktschritt (z. B. 30 ... 50 MHz) bestimmt und mit den Grenzen ≥ Lim1 sowie ≤ Lim2 verglichen. Bei Erreichung eines der Grenzwerte, z. B. Lim1 bzw. Lim2, wird entsprechend Fout = Fout + 1 bzw. Fout = Fout - 1 zur Messwert-Ausgabe um einen angepassten Auflösungsschritt gebracht und von neuem mit Diff = 0 sowie Cnt = 0 begonnen, die Auswertung fortzuführen. Damit wird eine wirksame und entsprechend gut gefilterte Messwertausgabe im gesamten Geschwindigkeitsbereich mittels wählbarer Parameter geschaffen, wobei die Messwertausgabe Fout dem aktuellen Messwert Fin adaptierend folgt. Wenn sich der aktuelle Messwert mit seinen periodischen Abweichungen innerhalb der vorgegebenen Grenzwerte stets bewegt, so ist es zweckmäßig, nach einer vorgegebenen Anzahl MAX von Taktzyklen Cnt, den Auswertevorgang von neuem zu starten. Damit können z. B. bei geringfügigen Unsymmetrien von sonst das Messsignal überlagernden und stark schwankenden, aber symmetrischen Störsignalen, ungewollte Messwertanpassungen vermieden werden. Das Ausgangsmesssignal bleibt somit auch bei solchen Grenzzuständen dann stabil. Die zu wählende MAX Taktzyklen Cnt richtet sich somit in erster Näherung nach der zweckmäßigen Integrationszeit für eine Messsignalbeobachtung und ist somit auch von gewählten Filterparametern, wie z. B. Lim, Unsym abhängig. Je stärker die Filterung und damit je höher die Adaptionszeitkonstante ist, um so höher ist auch die MAX- Taktzykluszahl Cnt zu wählen.

Die erfindungsgemäße Gestaltung des adaptiven Interpolationsfilters lässt sich symmetrisch, asymmetrisch, mit festen oder variablen Parameter und deren unterschiedlichsten Verknüpfungen gestalten und ist somit nicht auf die dargestellten Ausführungsbeispiele begrenzt. So können die Grenzwerte oder Parameter z. B. von der Auflösung des Messsignals, der Geschwindigkeit der zu messenden Messeinrichtung oder auch von externen Zuständen einer Maschinensteuerung mit speziellen Arbeitspunkten abhängig sein und eingegeben werden. Die flexible und vielfältig parametrierbare Grenzwerte für die sich selbst adaptierende Messwertausgabe bietet die vorteilhafte Filterung im gesamten Geschwindigkeitsbereich für hochauflösende Interpolations-Messwertverarbeitung in z. B. besonders störbehafteten Industrieumgebungen.

**Patentansprüche**

1.  Anordnung zur Interpolation eines von einer Messgröße abhängigen analogen Messsignals, das einem Spannungsteiler (Sp) zugeführt wird, dessen Abgriffsignale Komparatoren zugeführt werden, aus deren Ausgangssignalen die interpolierte Messgröße bestimmt wird, **dadurch gekennzeichnet, dass** die Abgriffsignale mittels Schalter ($S_1$ bis $S_8$), Komparatoren (Comp, Comp $_{-1}$) zugeführt werden, deren Anzahl kleiner als die der Abgriffsignale ist und dass die Schalter ($S_1$ bis $S_8$) die Abgriffsignale folgerichtig an Komparatoren (Comp, Comp $_{-1}$) anschalten.

2.  Anordnung nach Anspruch 1, **dadurch gekennzeichnet, dass** zwei Komparatoren (Comp, Comp $_{-1}$) für jeweils zwei benachbarte Abgriffsignale vorgesehen sind.

3.  Anordnung nach Anspruch 2, **dadurch gekennzeichnet, dass** die zwei Komparatoren durch einen Komparator (Comp) ersetzt sind, dem die beiden benachbarten Abgriffsignale jeweils nacheinander( über WS 1 / 2) zugeführt werden.

4.  Anordnung nach einem der Ansprüche 1 bis 3, **dadurch gekennzeichnet, daß** das Messsignal einem stetigen Funktionsverlauf hat.

5.  Anordnung nach Anspruch 4, **dadurch gekennzeichnet, dass** das Messsignal einen linearen Zusammenhang zur Messgröße hat.

6.  Anordnung nach Anspruch 4, **dadurch gekennzeichnet, dass** das Messsignal aus der Kombination von Sinusfuktionen gebildet ist.

7.  Anordnung nach Anspruch 6, **dadurch gekennzeichnet, dass** drei der Signale +sin, -sin, +cos und -cos verwendet werden und dass das Kombinationssignal bereichsweise aus einem unterschiedlichen Paar der Signale +sin, -sin, +cos und -cos gebildet wird.

8.  Anordnung nach einem der Ansprüche 1 bis 7 **gekennzeichnet, durch** ihre Anwendung bei kombinierten Messsystemen, bei denen mittels Sensoren eine Absolutwertbestimmung durchgeführt wird und Zwischenwerte zwischen jeweils zwei benachbarten Absolutwerten **durch** ein Inkremental- Messsystem ermittelt werden.

9.  Anordnung nach Anspruch 8, **dadurch gekennzeichnet, dass** die Zusammensetzung der Absolutwerte und der Inkrementalwerte zu einem Gesamtabsolutwert am Sensor geführt wird.

10. Anordnung nach einem der Ansprüche 1 bis 9, **dadurch gekennzeichnet, dass** ihr eine weitere Interpolationsstufe nachgeschaltet ist, in der die gewonnenen Differenzwerte der ersten Interpolation (Feinwerte) verstärkt und danach weiter zu Feinstwerten interpoliert werden.

**11.** Anordnung nach einem der Ansprüche 1 bis 10, **dadurch gekennzeichnet, dass** ein Interpolationsfilter nachgeschaltet ist, in dem jeweils die Differenz des gefilterten Werts zum Aktuellen Messwert gebildet wird und dass diese Differenzen bewertet werden und dass bei Erreichen eines Grenzwerts der zuletzt gefilterte Messwert um einen Schritt erhöht oder erniedrigt wird.

**12.** Anordnung nach Anspruch 11, **dadurch gekennzeichnet, dass** die zuletzt festgestellte Bewegungsrichtung der gelieferten Messwerte bei der Bewertung der aktuellen Messwerte berücksichtigt wird.

**13.** Anordnung nach einem der Ansprüche 1 bis 12. **dadurch gekennzeichnet, dass** die Geschwindigkeit der Verstelleinrichtung für die Auswahl der Auflösung der Interpolation und/oder Filterung des Messsignals herangezogen wird.

**14.** Verfahren zur Interpolation eines von einer Messgröße abhängigen analogen Messsignals, das einem Spannungsteiler (Sp) zugeführt wird, dessen Abgriffsignale Komparatoren zugeführt werden, aus deren Ausgangssignalen die interpolierte Messgröße bestimmt wird, **dadurch gekennzeichnet, dass** die Abgriffsignale mittels Schalter ($S_1$ bis $S_8$), Komparatoren (Comp, Comp $_{-1}$) zugeführt werden, deren Anzahl kleiner als die der Abgriffsignale ist und dass die Schalter ($S_1$ bis $S_8$) die Abgriffsignale folgerichtig an Komparatoren (Comp, Comp $_{-1}$) anschalten.

Figur 1

Figur 2

Figur 3

Figur 4

Figur 5

Figur 7

EP 1 318 383 A1

Figur 6

12

Figur 8

±SIN

±COS

**I**

Feinwert
u. Feinstwert

Fin

**F**

Lim

Unsym

MAX

Parameter

Fout

Fein- und
Feinstwert gefiltert

Grundabsolutwert

Cnt

**Z**

Gesamtabsolutwert

Figur 9

Parameter:

Lim     Grundfilterparameter
Unsym  Unsymmetrie mit/gegen Laufrichtung
MAX    Automatisches Rücksetzen nach MAX Zyklen

Figur 10

**Europäisches Patentamt**

# EUROPÄISCHER RECHERCHENBERICHT

Nummer der Anmeldung

EP 02 02 4075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 39 18 732 A (JENOPTIK JENA GMBH) 18. Januar 1990 (1990-01-18) * das ganze Dokument * --- | 1,2,4,6, 14 | G01D5/244 |
| A | EP 0 199 826 A (FANUC LTD) 5. November 1986 (1986-11-05) * Seite 14, Zeile 15-20; Abbildungen * --- | 1-14 | |
| A | US 3 234 361 A (ROBERT MCLAREN RONALD ET AL) 8. Februar 1966 (1966-02-08) * das ganze Dokument * --- | 1,4,6,7, 11,12,14 | |
| A | EP 0 220 547 A (BOSCH GMBH ROBERT) 6. Mai 1987 (1987-05-06) * das ganze Dokument * ----- | 1,4,5,14 | |

**RECHERCHIERTE SACHGEBIETE (Int.Cl.7)**

G01D

Der vorliegende Recherchenbericht wurde für alle Patentansprüche erstellt

| Recherchenort | Abschlußdatum der Recherche | Prüfer |
|---|---|---|
| DEN HAAG | 10. März 2003 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 02 02 4075

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2003

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 3918732 | A | | 18-01-1990 | DD | 273889 | A1 | 29-11-1989 |
| | | | | DE | 3918732 | A1 | 18-01-1990 |
| EP 0199826 | A | | 05-11-1986 | JP | 1717123 | C | 14-12-1992 |
| | | | | JP | 4000524 | B | 07-01-1992 |
| | | | | JP | 61110006 | A | 28-05-1986 |
| | | | | DE | 3585921 | D1 | 27-05-1992 |
| | | | | EP | 0199826 | A1 | 05-11-1986 |
| | | | | WO | 8602995 | A1 | 22-05-1986 |
| | | | | US | 4884226 | A | 28-11-1989 |
| US 3234361 | A | | 08-02-1966 | GB | 967291 | A | 19-08-1964 |
| | | | | CH | 417979 | A | 31-07-1966 |
| | | | | DE | 1448795 | A1 | 31-10-1968 |
| | | | | FR | 1338580 | A | 27-09-1963 |
| | | | | NL | 142254 | B | 15-05-1974 |
| EP 0220547 | A | | 06-05-1987 | DE | 3535842 | A1 | 09-04-1987 |
| | | | | EP | 0220547 | A1 | 06-05-1987 |
| | | | | JP | 62105050 | A | 15-05-1987 |

EPO FORM P0461

Für nähere Einzelheiten zu diesem Anhang : siehe Amtsblatt des Europäischen Patentamts, Nr.12/82